# EUROPEAN PATENT SPECIFICATION

(11) **EP 3 949 723 B1**
(45) Date of publication and mention of the grant of the patent: **04.06.2025**
(21) Application number: 20784772.4
(22) Date of filing: 03.04.2020
(51) Int. Cl.: A01G 13/02, A01G 9/14

(54) **PROTECTIVE COVER SYSTEM AND METHOD FOR THE INSTALLATION AND REMOVAL OF THE COVER OVER A CROP FIELD**
SCHUTZABDECKUNGSSYSTEM UND VERFAHREN ZUR INSTALLIEREN UND ENTFERNEN DER ABDECKUNG ÜBER EINEM FELD VON ERNTGUT
SYSTEME DE COUVERTURE DE PROTECTION ET PROCÉDÉ D'INSTALLATION ET DE RETRAIT DE LA COUVERTURE SUR UN CHAMP DE RECOLTE

(30) Priority: 05.04.2019 ES 201930316
(43) Date of publication of application: 09.02.2022
(73) Proprietor: G Plant Agronomist, S.L., 30840 Alhama de Murcia (ES)
(72) Inventor: VELASCO GARCIA, Gregorio, 30840 Alhama de Murcia (ES)
(74) Representative: Juncosa Miró, Jaime
(86) International application number: PCT/ES2020/070225
(87) International publication number: WO 2020/201606

(56) References cited:
- EP-A2- 2 232 983
- CN-A- 108 271 593
- DE-U1- 29 622 346
- ES-A1- 2 579 910
- IT-A1- BO20 120 621
- US-A1- 2004 003 536
- US-A1- 2004 049 991
- US-A1- 2004 049 991

## Description

### Field of the Art

The present invention relates to a protective cover system and a method for the installation and removal of said cover over a crop field.

The protective cover system will typically be used to generate a greenhouse effect by increasing the temperature in the crop field, by means of a cover that is transparent to sunlight. However, the protective cover system can also offer protection against adverse weather conditions, such as hail, frosts, or even excessive sunshine, and against birds or insects. Some of said potential uses of the protective cover can be achieved with perforated covers or meshes which allow the passage of rainwater, instead of with a cover that is transparent to sunlight.

### State of the Art

Protective covers for crop fields are known in the state of the art.

Perforated meshes or meshes made of transparent plastic bands are often used for covering crop fields, offering protection or causing an increase in temperature by means of a greenhouse effect.

Different structures for holding the mentioned covers over crop fields are known.

A commonly used structure consists of a plurality of parallel rows of stakes, with said stakes supporting a network of tautened cables supporting the material forming the cover, offering a large, strong cover.

The material forming the cover usually consists of flexible covering bands, laid out side by side, covering the entire surface of the crop field.

The examples of covers of this type are described in documents EP2353370B1, EP2783566, and ES2565696.

However, in all these mentioned examples the process of placing and/or removing the covering bands is extremely laborious, and therefore expensive, given that it requires lifting said material above some or all of the tautened cables, or even requiring them to be laid out in an undulated path forming peaks and valleys, passing under some cables and over others.

Furthermore, the described solutions propose attaching the cables at the upper ends of the stakes in a non-removable manner, i.e., for example with the cables being attached to said upper end of the stakes by means of clamps, gripping devices, or screws.

Therefore, these solutions are not suitable to facilitate the removal or replacement of the covering bands, for example, seasonally, in an economically viable manner.

Document US5311699 describes an alternative cover in which there is proposed a method which facilitates the installation and occasional removal of said cover by lifting the covering band over the cables and pulling it until it is deployed over said cables, being simply transversely supported on top of several cables, with this solution being undesirable as it is not very resistant to wind that can readily lift up parts of the covering band or cause it to vibrate against the cables, causing the premature wear thereof.

Document US2004049991A1 describes a cover formed by valley lines tautened on stakes at a first level and interspersed ridge lines tautened on stakes at a second level higher than the first level, including tautened transversal covering bands disposed transverse to the valley lines and ridge lines. Said covering bands pass over all the ridge lines and under all the valley lines.

According to this document, the valley lines and ridge lines are attached to the stakes by any known means, without specifying any preference or characteristic required for said attachment. Therefore, this document does not describe any solution referring to said attachment which allows ridge lines to be attached to or released from the stakes in quick and simple manner, and neither does it describe any quick and simple method for the installation or collection of the covering bands.

### Brief Description of the Invention

According to a first aspect, the present invention relates to a method for the installation of a cover over a crop field, the method including, in a manner that is known, the following steps:
a) disposing a plurality of valley lines tautened at a first level over said crop field and parallel to one another;
b) disposing a plurality of ridge lines parallel to one another and parallel to the valley lines, interspersed between the valley lines;
c) disposing a plurality of flexible covering bands transversely with respect to the ridge lines and valley lines, with each covering band passing over all the ridge lines and under all the valley lines;
Valley lines and ridge lines shall be understood as cables, whether wires, metal cables with twisted strands, plastic-coated metal cables, plastic cables, or any other solution offering inelastic cables that are resistant to significant tautening and to the elements.

The stakes can be metal stakes, for example hollow tubes, but other materials such as reinforced concrete are also contemplated.

Said stakes will be in a vertical or almost vertical position and will be supported over the crop field by their lower end, for example driven into the ground or supported on a footing.

Preferably, the covering bands are made of a plastic material that may or may not be transparent depending on the passage of light recommended for each crop, so as to allow the passage of sunlight over the crop field.

The method for installation proposes, in a manner not known in the available state of the art, for:
- the ridge lines to be disposed during step b) over the crop field at a lower level of installation than that of the first level;
- the covering bands to be disposed during step c), with the ridge lines being at the level of installation, the covering bands being laid out horizontally between the ridge lines positioned at the level of installation and the valley lines positioned at the first level.

The method also proposes the following additional step:
d) anchoring each ridge line on supports located at the upper ends of a number of vertical stakes disposed in a longitudinal alignment forming a row of stakes, with the ridge lines being tautened over the crop field at a second level higher than the first level, with said covering bands being tautened.

The proposed method for installation therefore comprises initially disposing the ridge lines at a lower level of installation than that of the first level at which the valley lines are installed, defining a horizontal passage between the ridge lines and the valley lines.

The covering bands are laid out horizontally through said passage, being laid out under the valley lines located at the first level and over the ridge lines disposed at the level of installation.

The ridge lines are then raised until they are anchored on the supports of the upper ends of the stakes, with the ridge lines then being located at the second level above the valley lines disposed at the first level.

It will be understood that the upper end of the stake is the portion of the stake farthest away from the crop field, for example, the last 50 cm of each stake.

When said raising of the ridge lines is performed, parts of the covering bands positioned over the ridge lines will also be lifted as they are pulled along by the ridge lines, with the covering bands adopting a geometry in the form of a zigzag roof, with the covering bands being tautened downwards by the valley lines and upwards by the ridge lines.

Optionally, it is proposed for the level of installation to be equal to zero, with the ridge lines being supported on the crop field before performing step c).

This greatly facilitates the operations of installing the covering bands because it allows the covering bands to be laid out directly over the crop field on top of the ridge lines, one or more operators to move through said crop field passing over the ridge lines while laying out the covering bands in a safe and comfortable manner, or even the use of machinery that may travel over the crop field and the ridge lines laid out over said crop field for quickly laying out the covering bands transversely to said ridge lines.

According to another embodiment of the invention, it is proposed for step d) to be performed by means of raising successive segments of each ridge line to a level higher than the second level, and subsequently depositing each of said segments of ridge line on a corresponding support in the form of a bracket or cradle at the upper end of the stakes, located at the second level.

In other words, a segment of a ridge line is lifted up, raising with it the transversal covering bands superimposed on said ridge line, lifting the segment of ridge line to a level slightly higher than the second level to then deposit said segment of ridge line on a support located at the upper end of a stake located at the second level. Said support will be in the form of a bracket or cradle such that it will retain the deposited segment of ridge line due to the effect of gravity and the tautening of the ridge line, preventing it from falling.

It will be understood that a support in the form of a bracket is a side protuberance of a stake defining on a support plane that will include a housing or notch in which the portion of ridge line is fitted in order to prevent the movement thereof.

It will also be understood that a support in the form of a cradle is defined by a V-shaped or U-shaped housing accessible at the upper portion thereof, with a bottom between two opposite sides, configured for retaining the portion of ridge line at the bottom thereof between the two opposite sides. Said support in the form of a cradle can be defined at the upper end of the pillar, or inside the pillar by an inverted L-shaped cut accessible from one side of the pillar, or by means of an element laterally fixed to the pillar.

The successive segments of each ridge line can be raised, for example, with the help of at least one pole provided at its upper end with a support in the form of a bracket or cradle, by attaching a segment of ridge line on the support of the pole, raising the pole, and lowering the pole depositing the segment of ridge line on the support of the stake, and releasing it from the support of the pole.

This operation can be performed manually by one operator or by several operators, thereby distributing the weight to be raised among them.

Optionally, it is also proposed for the previously mentioned step a) of the method to furthermore include disposing a plurality of tautening lines, with each being tautened and anchored at a lower level than that of the first level at least on two stakes of two rows of adjacent stakes, said tautening line passing over the valley line located at the first level and interposed between said two rows of adjacent stakes.

In other words, said tautening lines will pull the valley line downwards, keeping said valley line, and therefore the covering bands, tautened.

A second aspect of the present invention relates to a method for the removal of the mentioned cover over the crop field.

The method for removal is essentially a reverse version of the method for installation. Said method for removal is applied on a cover, which is known *per se,* including:
- a plurality of valley lines longitudinally tautened at a first level over said crop field and parallel to one another;
- a plurality of ridge lines laid out longitudinally parallel to one another and parallel to the valley lines, interspersed between the valley lines; with each ridge line being anchored on a number of supports located at the upper ends of a number of vertical stakes disposed in a longitudinal alignment forming a row of stakes, with the ridge lines being tautened over the crop field at a second level higher than the first level;
- a plurality of tautened flexible covering bands disposed transversely with respect to the ridge lines and valley lines, with each covering band passing over all the ridge lines and under all the valley lines.

The method for removal furthermore includes the following steps that are not known in the existing state of the art:
- releasing some or all of the ridge lines from the corresponding supports, locating them over the crop field at a lower level of installation than that of the first level, with the covering bands being relaxed;
- collecting each covering band by means of compacting same in a direction parallel to the direction of the ridge lines and valley lines, leaving most of the crop field uncovered, or by means of extracting same in the transverse direction through a side end of the covered crop field.

Preferably, only half the ridge lines will be released, releasing one out of every two ridge lines, alternating released and non-released lines.

Compacting the covering bands consists of longitudinally folding or crumpling up the covering bands, forming folds along the entire length of said covering bands in a direction transverse to the ridge lines and valley lines, thereby achieving that said covering bands are still supported by said ridge lines and valley lines, but with most of the crop field being uncovered.

Extracting the covering bands consists of extracting said covering bands through one of the sides of the crop field, in a direction transverse to the ridge lines and valley lines.

Optionally, it is also proposed for the step of releasing some or all of the ridge lines to be performed by means of raising successive segments of each ridge line to a level higher than the second level, releasing said segments of ridge line from the corresponding supports in the form of a bracket or cradle at the upper end of the stakes located at the second level, and subsequently lowering the mentioned segments of ridge line to the level of installation, preventing them from being deposited again on the mentioned supports on the stakes.

The successive segments of each ridge line can be raised with the help of at least one pole provided at its upper end with a support in the form of a bracket or cradle, by attaching a segment of ridge line on the support of the pole, raising the pole releasing the segment of ridge line from the support of the stake, and lowering the pole locating the segment of the ridge line at the level of installation.

Essentially, this step of the method is also a reverse embodiment of one of the proposed embodiments relative to the method for installation described above.

According to a third aspect, the present invention relates to a protective cover system for a crop field.

Said protective cover system includes, in a manner that is known in the state of the art:
- a plurality of valley lines longitudinally tautened at a first level over said crop field and parallel to one another;
- a plurality of ridge lines laid out longitudinally parallel to one another and parallel to the valley lines, interspersed between the valley lines, with each ridge line being anchored on a number of supports located at the upper ends of a number of vertical stakes disposed in a longitudinal alignment forming a row of stakes, with the ridge lines being tautened over the crop field at a second level higher than the first level;
- a plurality of tautened flexible covering bands disposed transversely with respect to the ridge lines and valley lines, each covering band passing over all the ridge lines and under all the valley lines;

However, in the proposed cover, it is proposed, in a manner not known in the existing state of the art, for the mentioned supports at the upper end of the stakes to be in the form of a bracket or cradle defining an open housing, upper or laterally accessible, provided with a bottom fitted between two opposite sides, with each support being configured for retaining the ridge lines at the second level, with the ridge lines being pressed against said bottom, between the two opposite sides of said supports, as a result of the tautening thereof and gravity, providing a removable anchoring and configured for allowing the release of the ridge line by means of a lifting movement and lateral movement thereof, providing removably anchored ridge lines.

The present invention also proposed the inclusion in the system of at least one manually operable pole provided at its upper end with a support in the form of a bracket or cradle configured for retaining a segment of ridge line therein by raising the pole, for releasing, or depositing, the segment of ridge line from/on the support of the stake.

The described supports allow the ridge lines to be anchored to or released from said supports in quick and simple manner, allowing the level of the ridge lines to be modified using said at least one manually operable pole, without having to climb on a ladder, and without there being any need to loosen screws or release any type of retaining closure or fastener, but at the same time ensuring that the position of the ridge lines is correctly fixed even against strong wind or thunderstorm conditions.

It is also proposed for said protective cover to be able to optionally include a plurality of tautening lines, each tautened and anchored on two stakes of two rows of adjacent stakes at a lower level than that of the first level, said tautening line passing over the ridge line, interposed between said two rows of adjacent stakes.

It is also proposed for the ridge lines and/or valley lines to be metal cables with a plastic sheath. The plastic sheath reduces the wear of the covering bands in contact with the ridge lines and valley lines due to vibration caused by wind and facilitates the sliding of the covering band over or below the ridge lines and valley lines, facilitating installation, removal, compaction, or extraction operations.

Furthermore, it is proposed for a protective grating to be located above said protective cover, with said protective grating being made up of grating bands supported on the same stakes as the protective cover and provided with a construction identical to that of the protective cover, with said grating bands being supported by a number of additional ridge lines located parallel to and above the ridge lines of the protective cover, and by a number of additional valley lines located parallel to and above the valley lines of the protective cover.

In other words, in addition to the ridge line in charge of supporting the covering bands, each stake will support an additional ridge line intended for supporting a protective grating.

The additional ridge line will be anchored on a number of supports located at the upper ends of the vertical stakes disposed in a longitudinal alignment forming a row of stakes, with the additional ridge lines being tautened at a third level higher than the second level.

There are also placed between the additional ridge lines additional valley lines which will be tautened at a level higher than the first level in which the valley lines intended for supporting the covering bands are placed, but lower than the third level.

The protective grating will be made up of grating bands transverse to the additional ridge lines and the additional valley lines, with said grating bands passing over the additional ridge lines and below the additional valley lines in a tautened state.

This construction allows the protective grating to be tautened over the protective cover, without said protective grating interfering with the operations of installing and removing the protective cover described above.

The grating bands can be installed and/or removed with the same method described in relation to the covering bands.

The protective grating protects the crop field and the protective cover from elements such as, for example, hail and attack by birds, even if the protective cover is removed or compacted.

Typically, the last stakes of each row of stakes will have a number of inclined cables fixing the upper end thereof to a footing that transmits loads generated by the tautening of the ridge lines to the ground without subjecting said last stakes to bending.

It is also contemplated for the ridge lines and/or valley lines to include, at the ends thereof beyond the last stake of the rows of stakes, an inclined segment connecting same with a footing, transmitting the tautening thereof to said footing.

Similarly, the covering bands may include at their ends an inclined segment which is lowered to the ground where said bands are attached, keeping them tautened, or include at their ends a bar connected to the ground by means of inclined cables, thereby preventing the bending of the stakes of the last row of stakes.

It will be understood that references to geometric positions such as, for example, parallel, perpendicular, tangent, etc., allow deviations of up to ±5° with respect to the theoretical position defined by said nomenclature.

Other features of the invention will become apparent in the following detailed description of an embodiment.

### Brief Description of the Figures

The foregoing and other advantages and features will be more fully understood based on the following detailed description of an embodiment in reference to the attached drawings which must be interpreted in an illustrative and non-limiting manner, wherein:

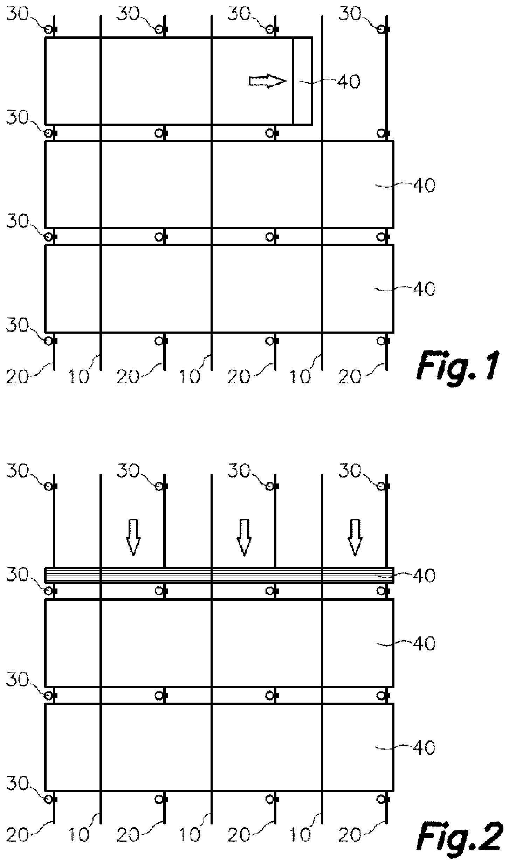

Figure 1 shows a schematic plan view of a crop field covered with a protective cover consisting of four parallel rows of stakes, each with four vertical stakes, the protective cover also including four parallel ridge lines coinciding with the rows of stakes and three valley lines interspersed between the ridge lines and between the rows of stakes, the protective cover furthermore including three transversal covering bands disposed transverse to the ridge lines and the valley lines, passing above the ridge lines and under the valley lines. This embodiment furthermore shows one of the covering bands only partially laid out along the length the crop field, according to an intermediate step of the method for the installation of the protective cover;
Figure 2 shows the same schematic plan view as Figure 1 but with one of the covering bands being collected, said band having been compacted in the direction of the ridge lines and valley lines;

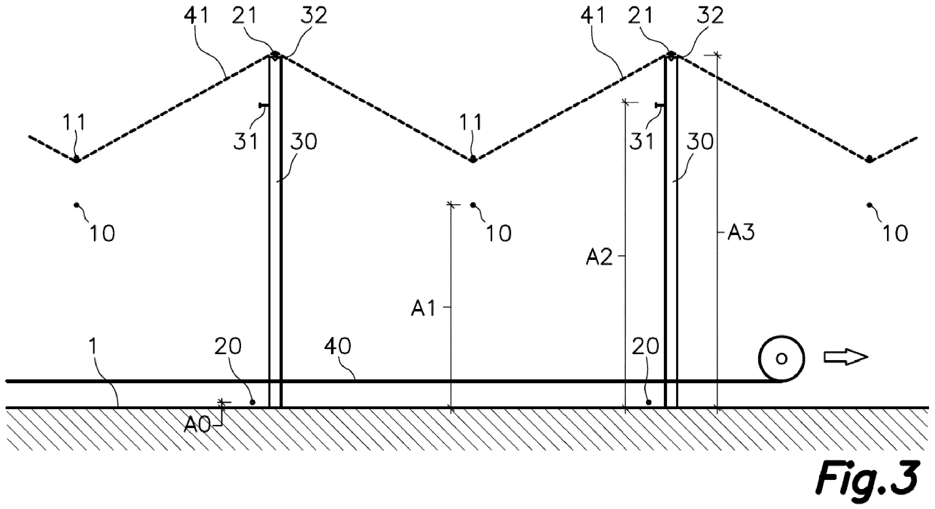

Figure 3 shows a schematic cross-section with respect to the ridge lines and valley lines, in a step of the method for installation in which the ridge lines have been released from the supports on the stakes and lowered to a level of installation flush with the crop field, with this figure showing how a covering band, unwounded from a roll, is being laid out over the ridge lines and under the valley lines. In the embodiment shown in this figure, there is located above the covering bands making up the protective cover a protective grating formed by grating bands passing over a number of additional ridge lines located parallel to and above the ridge lines at a third level, and under a number of additional valley lines located parallel to and above the valley lines;
Figure 4 shows the same schematic section view as Figure 3 but in a final step of the method for installation in which an operator, with the help of a pole, raises the ridge lines to the second level and attaches same in a number of supports on the stakes, tautening the covering bands between the ridge lines and the valley lines;
Figure 5 shows a schematic cross-section with respect to the ridge lines and valley lines equivalent to that shown in Figure 3 but according to another embodiment in which the valley lines are tautened downwards by means of a number of transverse lines, with said transverse lines limiting the level of installation at which the ridge lines can be located during the initial steps of the method for installation;
Figure 6 shows the same schematic section view as Figure 5 but in the final step of the method in which the ridge lines have been or are in the process of being raised and attached to the supports on the stakes;
Figure 7 shows a schematic longitudinal section coinciding with a ridge line of the protective cover shown in Figure 6 provided with a protective grating above the protective cover, with the covering bands being installed;
Figure 8 shows the same schematic longitudinal section as Figure 7 but with the covering bands being collected by means of compacting same in the direction parallel to the ridge lines;
Figure 9 shows an enlarged view of embodiments of the support in the form of a bracket or cradle located at the upper end of the stake, wherein the second and fourth examples are excluded from the scope of the claims.

### Detailed Description of an Embodiment

The attached figures show illustrative non-limiting embodiments of the present invention.

According to a preferred embodiment of the invention shown in the attached figures, the protective cover consists of a matrix of stakes 30 distributed in parallel rows of stakes over a crop field 1.

The protective cover furthermore includes a plurality of ridge lines 20 parallel to one another coinciding with the rows of stakes and of valley lines 10 parallel to one another and parallel to the ridge lines 20 interspersed between the rows of stakes.

The valley lines 10 are disposed horizontally tautened over the crop field 1 at a first distance A1. The ridge lines 2 are disposed horizontally tautened over the crop field 1 at a second distance A2 greater than the first distance A1.

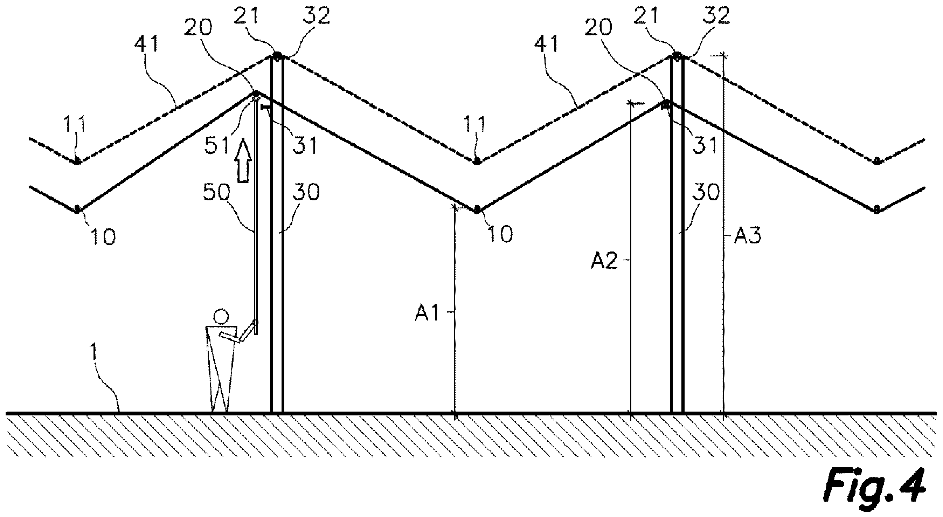

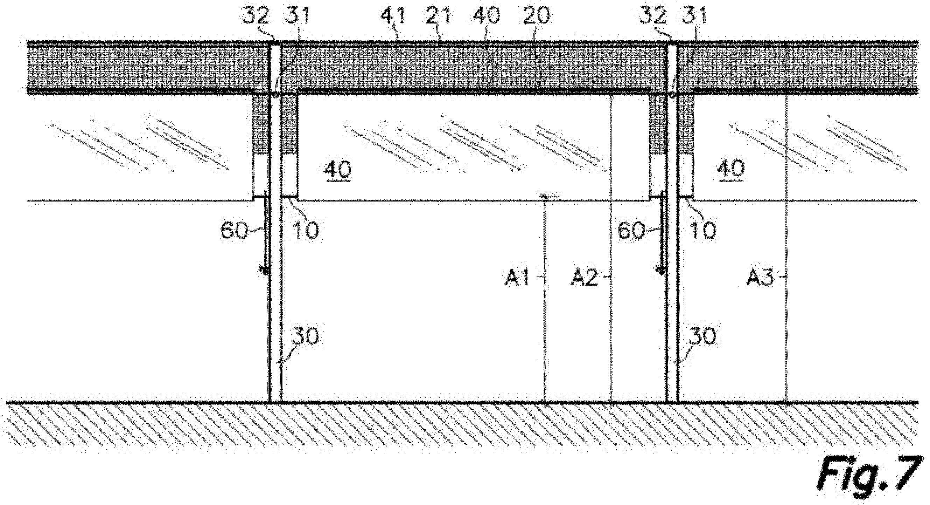

A number of covering bands 40 are disposed in a transverse direction with respect to said ridge lines 20 and valley lines 10, said covering bands 40 passing over all the ridge lines 20 located at the second distance A2 and under all the valley lines 10 located at the first distance A1, being tautened and adopting a zigzag shape, forming a protective cover for the crop field 1, as shown in Figures 4, 6, and 7.

Preferably the covering bands are made of transparent plastic, thereby allowing the passage of sunlight towards the crop field generating a greenhouse effect while at the same time providing protection against birds, insects, rain, hail, frosts, and other elements.

At its upper end portion, each stake 30 has a support 31 in the form of a bracket or cradle located at the second level A2. Said support 31 will be located on top of, on one side, or inside the stake 30, defining a housing in which a ridge line 20 is retained by gravity in a removable manner.

Once the protective cover is installed, each ridge line 20 will therefore be supported at the second level A2 by the supports 31 of the stakes 30 of a row of stakes.

The valley lines 10 will be retained at the first level A1 by the tautened covering bands 40, although at least the ends of each valley line 10 will be configured for supporting each valley line 10 at the first level A1 during the operations of installing and removing the protective cover. By way of example, it is proposed to include a number of cables that reproduce the zigzag shape of the covering bands 40 holding the valley lines 10 at the first level A1 also when the covering bands 40 have not yet been placed or when they have been removed.

Alternatively, it is proposed for a number of supports to be located at the first level A1 on a number of stakes located coinciding with the ends of the valley lines 10.

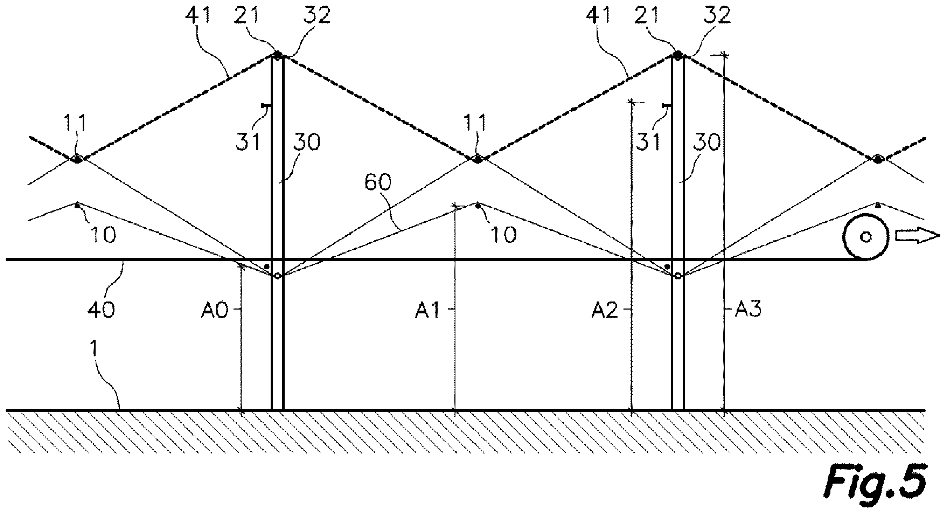

Optionally, as shown in Figures 5 to 8, it is contemplated for the valley lines 10 to also be tautened downwards by means of a number of transverse lines 60 passing over the valley lines 10 and tautened and anchored to the stakes 30 adjacent to a lower level than that of the first level A1.

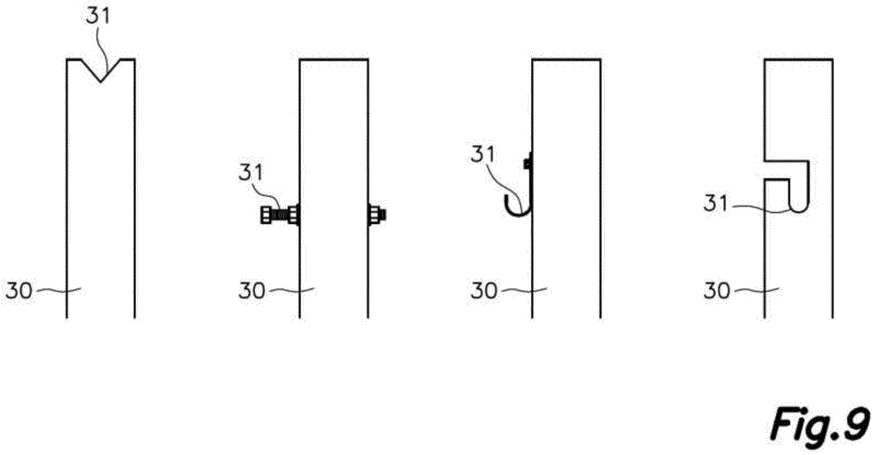

Figure 9 shows embodiments of said support 31 of the stakes 30 in which the ridge lines 20 are retained.

According to the first example starting from the left, the support 31 consists of a groove made on the upper head of the stake 30 in which said ridge line is housed and retained.

The second example, excluded from the scope of the claims, shows a support 31 consisting of a headed screw or headed bolt fixed to the stake 30 and projecting laterally in cantilever, allowing a ridge line to be supported thereon.

The third example of support 31 consists of a hook fixed to the side of the stake 30.

Lastly, the fourth example, excluded from the scope of the claims, of support 31 consists of an inverted L-shaped cut made on the body of the stake 30 which allows the ridge line to be laterally introduced through the horizontal part of the cut communicating with the side of the stake 30, and which also allows said ridge line 20 to be retained inside the vertical part of the inverted L-shaped cut by gravity.

The supports 31 of the stakes 30 described above allow the ridge line 20 to be released from the mentioned support 31 only by means of a slight lifting of said ridge line 20 along with a lateral movement thereof.

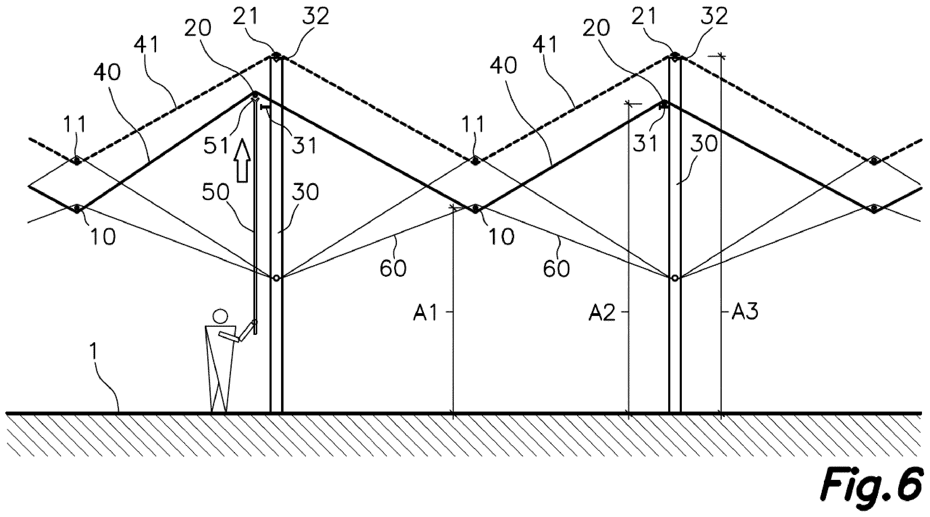

Figures 4 and 6 show how an operator, with the help of a pole 50 provided at its upper end with a support 51 in the form of a bracket or cradle, allows the operation of releasing the ridge line 20 from the support 31 of the stake 30 to be readily performed, or the reverse operation of attaching the ridge line 20 to said support 31 to be performed.

The present invention proposes a method for installation consisting of releasing the ridge lines 20 from the supports 31 of the stakes 30, lowering the ridge lines 20 to a lower level of installation A0 than that of the first level A1, as shown in Figures 3 and 5, and proceeding to layout the covering bands 40 over the ridge lines 20 located at the level of installation A0 and under the valley lines 10 located at the first level A1 in a rectilinear path transverse to the ridge lines 20 and the valley lines 10 which greatly facilitates the laying out of said covering band 40.

Once all the covering bands 40 have been laid out, a number of operators proceed to raise the ridge lines 20 again, and with the help of the poles 50 mentioned above, proceed to attach said ridge lines 20 to the corresponding supports 31 of the stakes 30, with the ridge lines 20 being attached at the second level A2 above the first level A1, tautening the covering bands 40 forming a zigzag.

When there are no transverse lines 60 connecting the valley lines 10 with the adjacent stakes 30, such as in the examples shown in Figures 3 and 4, the ridge lines 20 can be lowered to the level of the crop field, if desired, in which case the level of installation A0 will be equal to zero. This allows operators and machinery to move easily over the ridge lines 20 allowing the covering bands 40 to be laid our without any obstacle.

If, in contrast, there are transverse lines 60 tautening the valley lines 10 downwards, like in the case shown in Figures 5, 6, 7, and 8, then said transverse lines 60 limit the level of installation A0 at which the ridge lines 20 can be located, preventing the ridge lines 20 from being lowered below the anchoring points of the transverse lines 60 with the stakes 30.

In this case, the covering bands 40 can be laid out horizontally, but at a certain distance over the crop field 1.

This solution likewise allows operators and machinery to move freely over the crop field, in this case below the ridge lines 20 located at the level of installation A0.

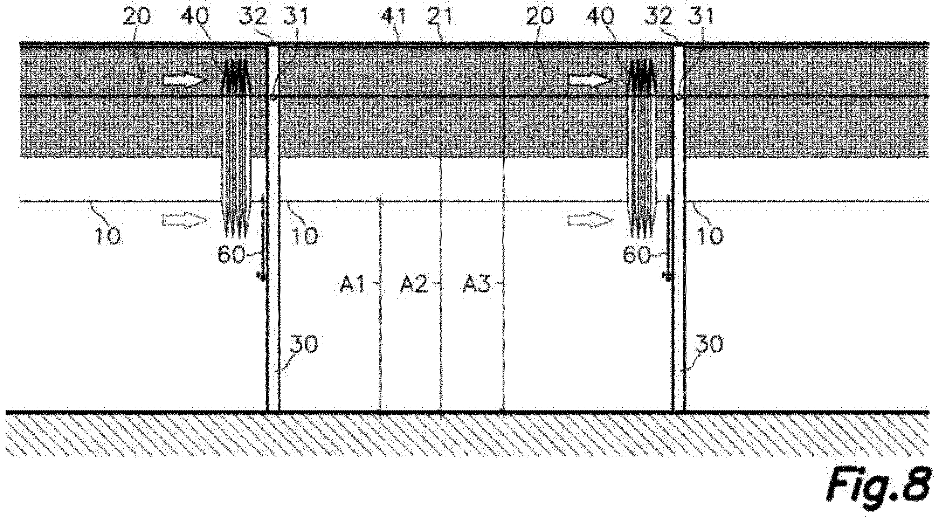

The proposed method also contemplates removing the covering bands 40, which can be extracted by means of a reverse operation with respect to the installation operation described up until now, or which can otherwise simply be compacted by means of folding or crumpling up in a direction parallel to the direction of the ridge lines 20, as shown in Figures 2 and 8. For compacting the covering bands 40, the tautening to which said covering bands 40 are subjected must be reduced. This can be achieved, for example, by releasing only some of the ridge lines 20, for example, one out of every three ridge lines 20, from the supports 31 and lowering them to the level of installation A0.

Additionally, it should be pointed out that Figures 3 to 8 show embodiments in which the protective cover includes a protective grating formed by grating bands 41 located above the covering bands 40.

In a similar manner as the covering bands 40, the grating bands 41 will be supported by means of a number of additional parallel ridge lines 21 superimposed on the ridge lines 20 at a third level A3 and by means of a number of additional parallel valley lines 11 superimposed on the valley lines 10.

The grating bands 41 can also be made of a plastic or textile material and will be configured to prevent birds and hail from entering, and to mitigate the influence of frosts that may damage the crops and also the covering bands 40.

The same method for installation and removal set forth in relation to the covering bands 40 could be applied to the grating bands 41.

It will be understood that the different parts making up the invention described in one embodiment can be freely combined with the parts described in other different embodiments falling within the scope of the invention defined by the appended claims.

## Claims

1. A method for the installation of a cover over a crop field (1), the method including the following steps:
a) disposing a plurality of valley lines (10) longitudinally tautened at a first level (A1) over said crop field (1) and parallel to one another;
b) disposing a plurality of ridge lines (20) laid out longitudinally parallel to one another and parallel to the valley lines (10), interspersed between the valley lines (10);
c) disposing a plurality of flexible covering bands (40) transversely with respect to the ridge lines (20) and the valley lines (10), with each covering band (40) passing over all the ridge lines (20) and under all the valley lines (10);
**characterized in that**
the ridge lines (20) are disposed during step b) over the crop field (1) at a lower level of installation (A0) than that of the first level (A1);
the covering bands (40) are disposed during step c) with the ridge lines (20) being at said level of installation (A0), the covering bands (40) being laid out horizontally between the ridge lines (20) positioned at the level of installation (A0) and the valley lines (10) positioned at the first level (A1);
and **in that** the method continues with the following step:
d) anchoring each ridge line (20) on supports (31) located at the upper ends of a number of vertical stakes (30) disposed in a longitudinal alignment forming a row of stakes, with the ridge lines (20) being tautened at a second level (A2) over the crop field (1) higher than the first level (A1), with said covering bands (40) being tautened.

2. The method for installation according to claim 1, whereat the level of installation (A0) is equal to zero, with the ridge lines (20) being supported on the crop field (1) before performing step c).

3. The method for installation according to claim 1 or 2, wherein step d) is performed by means of raising successive segments of each ridge line (20) to a level higher than the second level (A2), and subsequently depositing each of said segments of ridge line (20) on a corresponding support (31) in the form of a bracket or cradle at the upper end of the stakes (30), located at the second level (A2).

4. The method for installation according to claim 3, wherein raising the successive segments of each ridge line (20) is performed with the help of at least one pole (50) provided at its upper end with a support (51) in the form of a bracket or cradle, by attaching a segment of ridge line (20) on the support of the pole (50), raising the pole (50), and lowering the pole (50) depositing the segment of ridge line (20) on the support (31) of the stake (30), and releasing it from the support (51) of the pole (50).

5. The method for installation according to claim 1, wherein step a) of the method furthermore includes disposing a plurality of tautening lines (60), with each being tautened and anchored at a lower level than that of the first level (A1) at least in two stakes (30) of two rows of adjacent stakes, said tautening line (60) passing over the valley line (10) located at the first level (A1) and interposed between said two rows of adjacent stakes.

6. A method for the removal of a cover over a crop field (1), said cover including:
• a plurality of valley lines (10) longitudinally tautened at a first level (A1) over said crop field (1) and parallel to one another;
• a plurality of ridge lines (20) laid out longitudinally parallel to one another and parallel to the valley lines (10), interspersed between the valley lines (10); with each ridge line (20) being anchored on a number of supports (31) located at the upper ends of a number of vertical stakes (30) disposed in a longitudinal alignment forming a row of stakes, with the ridge lines (20) being tautened at a second level (A2) over the crop field (1) higher than the first level (A1);
• a plurality of tautened flexible covering bands (40) disposed transversely with respect to the ridge lines (20) and the valley lines (10), each covering band (40) passing over all the ridge lines (20) and under all the valley lines (10);
the method for removal including the following steps:
• releasing some or all of the ridge lines (20) from the corresponding supports (31), locating the released ridge lines (20) at a lower level of installation (A0) over the crop field (1) than that of the first level (A1), with the covering bands (40) being relaxed;
• collecting each covering band (40) by means of compacting same in a direction parallel to the direction of the ridge lines (20) and valley lines (10), leaving most of the crop field (1) uncovered, or by means of extracting same in the transverse direction through a side end of the covered crop field (1);
**characterized in that** the step of releasing some or all of the ridge lines (20) is performed by means of raising successive segments of each ridge line (20) to a level higher than the second level (A2), releasing said segments of ridge line (20) from the corresponding supports (31) in the form of a bracket or cradle at the upper end of the stakes (30) located at the second level (A2), and subsequently lowering the mentioned segments of ridge line (20) to the level of installation (A0), preventing it from being deposited again on the mentioned supports (31) of the stakes (30).

7. The method for removal according to claim 6, wherein raising the successive segments of each ridge line (20) is performed with the help of at least one pole (50) provided at its upper end with a support (51) in the form of a bracket or cradle, by attaching a segment of ridge line (20) on the support (51) of the pole (50), raising the pole (50) releasing the segment of ridge line (20) from the support (31) of the stake (30), and lowering the pole (50) locating the segment of the ridge line (20) at the level of installation (A0).

8. A protective cover system for a crop field (1) including:
• a plurality of valley lines (10) longitudinally tautened at a first level (A1) over said crop field (1) and parallel to one another;
• a plurality of ridge lines (20) laid out longitudinally parallel to one another and parallel to the valley lines (10), interspersed between the valley lines (10), with each ridge line (20) being anchored on a number of supports (31) located at the upper ends of a number of vertical stakes (30) disposed in a longitudinal alignment forming a row of stakes, with the ridge lines (20) being tautened at a second level (A2) over the crop field (1) higher than the first level (A1);
• a plurality of tautened flexible covering bands (40) disposed transversely with respect to the ridge lines (20) and the valley lines (10), each covering band (40) passing over all the ridge lines (20) and under all the valley lines (10);
**characterized in that**:
the mentioned supports (31) at the upper end of the stakes (30) are in the form of a bracket or a cradle defining an open housing, upper or laterally accessible, provided with a bottom fitted between two opposite sides, with each support (31) being configured for retaining the ridge lines (20) at the second level (A2) pressed against said bottom, between the two opposite sides, as a result of the tautening thereof and of gravity, and configured for allowing the release of the ridge line (31) by means of a lifting movement and lateral movement thereof, providing removably anchored ridge lines (20); and
at least one manually operable pole (50) provided at its upper end with a support (51) in the form of a bracket or cradle configured for retaining a segment of ridge line (20) therein by raising the pole (50), for releasing, or depositing, the segment of ridge line (20) from/on the support (31) of the stake (30).

9. The protective cover system according to claim 8, wherein said protective cover furthermore includes a plurality of tautening lines (60), each tautened and anchored in two stakes (30) of two rows of adjacent stakes at a lower level than that of the first level (A1), said tautening line (60) passing over the valley line (10) interposed between said two rows of adjacent stakes.

10. The protective cover system according to claim 8 or 9, wherein the ridge lines (20) and/or the valley lines (10) are metal cables with a plastic sheath.

11. The protective cover system according to claim 8, 9 or 10, wherein there is located above said protective cover a protective grating made up of grating bands (41) supported on the same stakes (30) as the protective cover and provided with a construction identical to that of the protective cover, with said grating bands (41) being supported by a number of additional ridge lines (21) located parallel to and above the ridge lines (20) of the protective cover and anchored to an additional support (32) located at the upper end of the stake (30) at a third level (A3) higher than the second level (A2), and by a number of additional valley lines (11) located parallel to and above the valley lines (10) of the protective cover.

## Patentansprüche

1. Verfahren zum Installieren einer Abdeckung über einem Feld von Erntgut (1), wobei das Verfahren die folgenden Schritte beinhaltet:
a) Anordnen einer Vielzahl von Tallinien (10), die längs auf einer ersten Ebene (A1) über dem Feld von Erntgut (1) und parallel zueinander gespannt sind;
b) Anordnen einer Vielzahl von Rückenlinien (20), die längs parallel zueinander und parallel zu den Tallinien (10) verlaufen und zwischen den Tallinien (10) verteilt sind;
c) Anordnen einer Vielzahl flexibler Abdeckbänder (40) quer in Bezug auf die Rückenlinien (20) und die Tallinien (10), wobei jedes Abdeckband (40) über alle Rückenlinien (20) und unter alle Tallinien (10) geht;
**dadurch gekennzeichnet, dass**
die Rückenlinien (20) während Schritt b) über dem Feld von Erntgut (1) auf einer niedrigeren Installationsebene (A0) als die der ersten Ebene (A1) angeordnet werden;
die Abdeckbänder (40) während Schritt c) so angeordnet werden, dass sich die Rückenlinien (20) auf der Installationsebene (A0) befinden, wobei die Abdeckbänder (40) horizontal zwischen den Rückenlinien (20), die auf der Installationsebene (A0) positioniert sind, und den Tallinien (10), die auf der ersten Ebene (A1) positioniert sind, verlaufen;
und dass das Verfahren mit dem folgenden Schritt fortgesetzt wird:
d) Verankern jeder Rückenlinie (20) auf Trägern (31), die sich an den oberen Enden einer Anzahl vertikaler Pfähle (30) befinden, die in einer Längsausrichtung unter Bildung einer Reihe von Pfählen angeordnet sind, wobei die Rückenlinien (20) auf einer zweiten Ebene (A2) über dem Feld von Erntgut (1) höher als die erste Ebene (A1) gespannt werden, wobei die Abdeckbänder (40) gespannt werden.

2. Verfahren zum Installieren nach Anspruch 1, wobei die Installationsebene (A0) gleich Null ist, wobei die Rückenlinien (20) auf dem Feld von Erntgut (1) getragen werden, bevor Schritt c) durchgeführt wird.

3. Verfahren zum Installieren nach Anspruch 1 oder 2, wobei Schritt d) durchgeführt wird, indem aufeinanderfolgende Segmente jeder Rückenlinie (20) auf eine Ebene angehoben werden, die höher ist als die zweite Ebene (A2), und anschließend jedes der Segmente der Rückenlinie (20) auf einem entsprechenden Träger (31) in Form einer Konsole oder eines Gestells am oberen Ende der Pfähle (30) abgelegt wird, die sich auf der zweiten Ebene (A2) befinden.

4. Verfahren zum Installieren nach Anspruch 3, wobei das Anheben der aufeinanderfolgenden Segmente jeder Rückenlinie (20) mit Hilfe mindestens einer Stange (50) durchgeführt wird, die an ihrem oberen Ende mit einem Träger (51) in Form einer Konsole oder eines Gestells versehen ist, indem ein Segment der Rückenlinie (20) auf dem Träger der Stange (50) angebracht wird, die Stange (50) angehoben wird und die Stange (50) abgesenkt wird, wobei das Segment der Rückenlinie (20) auf dem Träger (31) des Pfahls (30) abgelegt wird und von dem Träger (51) der Stange (50) gelöst wird.

5. Verfahren zum Installieren nach Anspruch 1, wobei Schritt a) des Verfahrens außerdem das Anordnen einer Vielzahl von Spannleinen (60) beinhaltet, wobei jede auf einer niedrigeren Ebene als jener der ersten Ebene (A1) gespannt und verankert ist, mindestens in zwei Pfählen (30) von zwei Reihen benachbarter Pfähle, wobei die Spannleine (60) über die Tallinie (10) geht, die sich auf der ersten Ebene (A1) befindet und zwischen den zwei Reihen benachbarter Pfähle liegt.

6. Verfahren zum Entfernen einer Abdeckung über einem Feld von Erntgut (1), wobei die Abdeckung Folgendes beinhaltet:
• eine Vielzahl von Tallinien (10), die längs auf einer ersten Ebene (A1) über dem Feld von Erntgut (1) und parallel zueinander gespannt sind;
• eine Vielzahl von Rückenlinien (20), die längs parallel zueinander und parallel zu den Tallinien (10) verlaufen und zwischen den Tallinien (10) verteilt sind; wobei jede Rückenlinie (20) auf einer Anzahl von Trägern (31) verankert ist, die sich an den oberen Enden einer Anzahl vertikaler Pfähle (30) befinden, die in einer Längsausrichtung unter Bildung einer Reihe von Pfählen angeordnet sind, wobei die Rückenlinien (20) auf einer zweiten Ebene (A2) über dem Feld von Erntgut (1) höher als die erste Ebene (A1) gespannt werden;
• eine Vielzahl gespannter flexibler Abdeckbänder (40), die quer in Bezug auf die Rückenlinien (20) und die Tallinien (10) angeordnet sind, wobei jedes Abdeckband (40) über alle Rückenlinien (20) und unter alle Tallinien (10) geht;
wobei das Verfahren zum Entfernen die folgenden Schritte beinhaltet:
• Lösen einiger oder aller Rückenlinien (20) von den entsprechenden Trägern (31), wobei sich die gelösten Rückenlinien (20) auf einer niedrigeren Installationsebene (A0) über dem Feld von Erntgut (1) befinden als auf jener der ersten Ebene (A1), wobei die Abdeckbänder (40) entspannt sind;
• Sammeln jedes Abdeckbands (40) durch Verdichten desselben in einer Richtung parallel zur Richtung der Rückenlinien (20) und Tallinien (10), wobei der größte Teil des Feldes von Erntgut (1) unbedeckt bleibt, oder durch Herausziehen desselben in Querrichtung durch ein seitliches Ende des abgedeckten Feldes von Erntgut (1);
**dadurch gekennzeichnet, dass** der Schritt des Lösens einiger oder aller Rückenlinien (20) durchgeführt wird, indem aufeinanderfolgende Segmente jeder Rückenlinie (20) auf eine Ebene angehoben werden, die höher ist als die zweite Ebene (A2), die Segmente der Rückenlinie (20) von den entsprechenden Trägern (31) in Form einer Konsole oder eines Gestells am oberen Ende der Pfähle (30) gelöst werden, die sich auf der zweiten Ebene (A2) befinden, und anschließend die Segmente der Rückenlinie (20) auf die Installationsebene (A0) abgesenkt werden, wobei verhindert wird, dass sie erneut auf den Trägern (31) der Pfähle (30) abgelegt werden.

7. Verfahren zum Entfernen nach Anspruch 6, wobei das Anheben der aufeinanderfolgenden Segmente jeder Rückenlinie (20) mit Hilfe mindestens einer Stange (50) durchgeführt wird, die an ihrem oberen Ende mit einem Träger (51) in Form einer Konsole oder eines Gestells versehen ist, indem ein Segment der Rückenlinie (20) auf dem Träger (51) der Stange (50) angebracht wird, die Stange (50) angehoben wird, wobei das Segment der Rückenlinie (20) von dem Träger (31) des Pfahls (30) gelöst wird, und die Stange (50) abgesenkt wird, wobei sich das Segment der Rückenlinie (20) auf der Installationsebene (A0) befindet.

8. Schutzabdeckungssystem für ein Feld von Erntgut (1), das Folgendes beinhaltet:
• eine Vielzahl von Tallinien (10), die längs auf einer ersten Ebene (A1) über dem Feld von Erntgut (1) und parallel zueinander gespannt sind;
• eine Vielzahl von Rückenlinien (20), die längs parallel zueinander und parallel zu den Tallinien (10) verlaufen und zwischen den Tallinien (10) verteilt sind; wobei jede Rückenlinie (20) auf einer Anzahl von Trägern (31) verankert ist, die sich an den oberen Enden einer Anzahl vertikaler Pfähle (30) befinden, die in einer Längsausrichtung unter Bildung einer Reihe von Pfählen angeordnet sind, wobei die Rückenlinien (20) auf einer zweiten Ebene (A2) über dem Feld von Erntgut (1) höher als die erste Ebene (A1) gespannt werden;
• eine Vielzahl gespannter flexibler Abdeckbänder (40), die quer in Bezug auf die Rückenlinien (20) und die Tallinien (10) angeordnet sind, wobei jedes Abdeckband (40) über alle Rückenlinien (20) und unter alle Tallinien (10) geht;
**dadurch gekennzeichnet, dass**:
die Träger (31) am oberen Ende der Pfähle (30) die Form einer Konsole oder eines Gestells haben, die ein offenes Gehäuse definieren, das von oben oder seitlich zugänglich ist und mit einem Boden versehen ist, der zwischen zwei gegenüberliegenden Seiten eingepasst ist, wobei jeder Träger (31) dazu konfiguriert ist, die Rückenlinien (20) auf der zweiten Ebene (A2) zwischen den beiden gegenüberliegenden Seiten gegen den Boden gedrückt zu halten, als Ergebnis des Spannens davon und der Schwerkraft, und dazu konfiguriert, das Lösen der Rückenlinie (31) durch eine Hebebewegung und eine seitliche Bewegung davon zu ermöglichen, wobei entfernbar verankerte Rückenlinien (20) bereitgestellt werden; und
wobei mindestens eine manuell betätigbare Stange (50) an ihrem oberen Ende mit einem Träger (51) in Form einer Konsole oder eines Gestells versehen ist, konfiguriert zum Halten eines Segments der Rückenlinie (20) darin durch Anheben der Stange (50), zum Lösen oder Ablegen des Segments der Rückenlinie (20) von/auf dem Träger (31) des Pfostens (30).

9. Schutzabdeckungssystem nach Anspruch 8, wobei die Schutzabdeckung außerdem eine Vielzahl von Spannleinen (60) beinhaltet, jeweils gespannt und verankert in zwei Pfählen (30) von zwei Reihen benachbarter Pfähle auf einer niedrigeren Ebene als jener der ersten Ebene (A1), wobei die Spannleine (60) über die Tallinie (10) geht, die zwischen den zwei Reihen benachbarter Pfähle liegt.

10. Schutzabdeckungssystem nach Anspruch 8 oder 9, wobei die Rückenlinien (20) und/oder die Tallinien (10) Metallkabel mit einer Kunststoffummantelung sind.

11. Schutzabdeckungssystem nach Anspruch 8, 9 oder 10, wobei sich über der Schutzabdeckung ein Schutzgitter befindet, das aus Gitterbändern (41) besteht, die auf denselben Pfosten (30) wie die Schutzabdeckung getragen werden und mit einer identischen Konstruktion wie die Schutzabdeckung versehen sind, wobei die Gitterbänder (41) von einer Anzahl zusätzlicher Rückenlinien (21) getragen werden, die sich parallel zu und über den Rückenlinien (20) der Schutzabdeckung befinden und an einem zusätzlichen Träger (32) verankert sind, der sich am oberen Ende des Pfostens (30) in einer dritten Ebene (A3) befindet, die höher ist als die zweite Ebene (A2), und durch eine Anzahl zusätzlicher Tallinien (11), die sich parallel zu und oberhalb der Tallinien (10) der Schutzabdeckung befinden.

## Revendications

1. Procédé d'installation d'une couverture sur un champ de récolte (1), le procédé comportant les étapes suivantes :
a) disposition d'une pluralité de lignes de vallée (10) tendues longitudinalement à un premier niveau (A1) sur ledit champ de récolte (1) et en parallèle les unes aux autres ;
b) disposition d'une pluralité de lignes de crête (20) disposées longitudinalement en parallèle les unes aux autres et en parallèle aux lignes de vallée (10), intercalées entre les lignes de vallée (10) ;
c) disposition d'une pluralité de bandes de recouvrement flexibles (40) transversalement par rapport aux lignes de crête (20) et aux lignes de vallée (10), chaque bande de recouvrement (40) passant sur toutes les lignes de crête (20) et sous toutes les lignes de vallée (10) ;
**caractérisé en ce que**
les lignes de crête (20) sont disposées lors de l'étape b) sur le champ de récolte (1) à un niveau d'installation (A0) inférieur à celui du premier niveau (A1) ;
les bandes de recouvrement (40) sont disposées lors de l'étape c) avec les lignes de crête (20) étant audit niveau d'installation (A0), les bandes de recouvrement (40) étant disposées horizontalement entre les lignes de crête (20) positionnées au niveau d'installation (A0) et les lignes de vallée (10) positionnées au premier niveau (A1) ;
et **en ce que** le procédé continue avec l'étape suivante :
d) ancrage de chaque ligne de crête (20) sur des supports (31) situés aux extrémités supérieures d'une pluralité de piquets verticaux (30) disposés selon un alignement longitudinal formant une rangée de piquets, les lignes de crête (20) étant tendues à un deuxième niveau (A2) sur le champ de récolte (1) supérieur au premier niveau (A1), lesdites bandes de recouvrement (40) étant tendues.

2. Procédé d'installation selon la revendication 1, dans lequel le niveau d'installation (A0) est égal à zéro, les lignes de crête (20) étant supportées sur le champ de récolte (1) avant la réalisation de l'étape c).

3. Procédé d'installation selon la revendication 1 ou 2, dans lequel l'étape d) est réalisée au moyen de l'élévation de segments successifs de chaque ligne de crête (20) à un niveau supérieur au deuxième niveau (A2), et ensuite la déposition de chacun desdits segments de ligne de crête (20) sur un support (31) correspondant sous forme d'une console ou berceau à l'extrémité supérieure des piquets (30), situé au deuxième niveau (A2).

4. Procédé d'installation selon la revendication 3, dans lequel l'élévation des segments successifs de chaque ligne de crête (20) est réalisée par le biais d'au moins un poteau (50) prévu à son extrémité supérieure avec un support (51) sous forme d'une console ou berceau, en attachant un segment de la ligne de crête (20) sur le support du poteau (50), en élevant le poteau (50), et abaissant le poteau (50) déposant le segment de ligne de crête (20) sur le support (31) du piquet (30), et en le libérant du support (51) du poteau (50).

5. Procédé d'installation selon la revendication 1, dans lequel étape a) du procédé comporte en outre la disposition d'une pluralité de lignes de tension (60), chacune étant tendue et ancrée à un niveau inférieur à celui du premier niveau (A1) au moins en deux piquets (30) de deux rangées de piquets adjacents, ladite ligne de tension (60) passant sur la ligne de vallée (10) située au premier niveau (A1) et interposée entre lesdites deux rangées de piquets adjacents.

6. Procédé de retrait d'une couverture sur un champ de récolte (1), ladite couverture comportant :
• une pluralité de lignes de vallée (10) tendues longitudinalement à un premier niveau (A1) sur ledit champ de récolte (1) et en parallèle les unes aux autres ;
• une pluralité de lignes de crête (20) disposées longitudinalement en parallèle les unes aux autres et en parallèle aux lignes de vallée (10), intercalées entre les lignes de vallée (10) ; chaque ligne de crête (20) étant ancrée sur une pluralité de supports (31) situés aux extrémités supérieures d'une pluralité de piquets verticaux (30) disposés selon un alignement longitudinal formant une rangée de piquets, les lignes de crête (20) étant tendues à un deuxième niveau (A2) sur le champ de récolte (1) supérieur au premier niveau (A1) ;
• une pluralité de bandes de recouvrement flexibles tendues (40) disposées transversalement par rapport aux lignes de crête (20) et aux lignes de vallée (10), chaque bande de recouvrement (40) passant sur toutes les lignes de crête (20) et sous toutes les lignes de vallée (10) ;
le procédé de retrait comportant les étapes suivantes :
• libération d'une partie ou la totalité des lignes de crête (20) à partir des supports (31) correspondants, en situant les lignes de crête (20) libérées à un niveau d'installation (A0) sur le champ de récolte (1) inférieur à celui du premier niveau (A1), les bandes de recouvrement (40) étant relâchées ;
• collection de chaque bande de recouvrement (40) au moyen du compactage de celles-ci dans une direction parallèle à la direction des lignes de crête (20) et des lignes de vallée (10), en laissant la plupart du champ de récolte (1) découvert, ou au moyen de l'extraction de celles-ci dans la direction transversale à travers une extrémité latérale du champ de récolte (1) couvert ;
**caractérisé en ce que** l'étape de libération d'une partie ou la totalité des lignes de crête (20) est réalisée au moyen de l'élévation de segments successifs de chaque ligne de crête (20) à un niveau supérieur au deuxième niveau (A2), la libération desdits segments de ligne de crête (20) à partir des supports (31) correspondants sous forme d'une console ou berceau à l'extrémité supérieure des piquets (30) situés au deuxième niveau (A2), et ensuite l'abaissement desdits segments de ligne de crête (20) au niveau d'installation (A0), en empêchant qu'ils ne soient déposés à nouveau sur lesdits supports (31) des piquets (30).

7. Procédé de retrait selon la revendication 6, dans lequel l'élévation des segments successifs de chaque ligne de crête (20) est réalisée par le biais d'au moins un poteau (50) prévu à son extrémité supérieure avec un support (51) sous forme d'une console ou berceau, en attachant un segment de ligne de crête (20) sur le support (51) du poteau (50), en élevant le poteau (50) libérant le segment de ligne de crête (20) à partir du support (31) du piquet (30), et en abaissant le poteau (50) situant le segment de la ligne de crête (20) au niveau d'installation (A0).

8. Système de couverture de protection pour un champ de récolte (1) comportant :
• une pluralité de lignes de vallée (10) tendues longitudinalement à un premier niveau (A1) sur ledit champ de récolte (1) et en parallèle les unes aux autres ;
• une pluralité de lignes de crête (20) disposées longitudinalement en parallèle les unes aux autres et en parallèle aux lignes de vallée (10), intercalées entre les lignes de vallée (10), chaque ligne de crête (20) étant ancrée sur une pluralité de supports (31) situés aux extrémités supérieures d'une pluralité de piquets verticaux (30) disposés selon un alignement longitudinal formant une rangée de piquets, les lignes de crête (20) étant tendues à un deuxième niveau (A2) sur le champ de récolte (1) supérieur au premier niveau (A1) ;
• une pluralité de bandes de recouvrement flexibles tendues (40) disposées transversalement par rapport aux lignes de crête (20) et aux lignes de vallée (10), chaque bande de recouvrement (40) passant sur toutes les lignes de crête (20) et sous toutes lignes de vallée (10) ;
**caractérisé en ce que** :
lesdits supports (31) à l'extrémité supérieure des piquets (30) sont sous forme d'une console ou un berceau définissant un logement ouvert, accessible par la partie supérieure ou latérale, pourvu d'une partie inférieure emboîtée entre deux côtés opposées, chaque support (31) étant configuré pour retenir les lignes de crête (20) au deuxième niveau (A2) pressées contre ladite partie inférieure, entre les deux côtés opposés, du fait de la tension de celles-ci et de la gravité, et configuré pour permettre la libération de la ligne de crête (31) au moyen d'un mouvement de levage et d'un mouvement latéral de celle-ci, en fournissant des lignes de crête (20) ancrées de manière amovible ; et
au moins un poteau (50) opérable manuellement pourvu à son extrémité supérieure d'un support (51) sous forme d'une console ou berceau configurée pour retenir un segment de ligne de crête (20) dans celui-ci en élevant le poteau (50), pour libérer, ou déposer, le segment de ligne de crête (20) à partir du/sur le support (31) du piquet (30).

9. Système de couverture de protection selon la revendication 8, dans lequel ladite couverture de protection comporte en outre une pluralité de lignes de tension (60), chacune tendue et ancrée dans deux piquets (30) de deux rangées de piquets adjacents à un niveau inférieur à celui du premier niveau (A1), ladite ligne de tension (60) passant sur la ligne de vallée (10) interposée entre lesdites deux rangées de piquets adjacents.

10. Système de couverture de protection selon la revendication 8 ou 9, dans lequel les lignes de crête (20) et/ou les lignes de vallée (10) sont des câbles en métal avec une gaine en plastique.

11. Système de couverture de protection selon la revendication 8, 9 ou 10, dans lequel, sur ladite couverture de protection, est située une grille de protection constituée de bandes de grille (41) supportées sur les mêmes piquets (30) que la couverture de protection et pourvues d'une construction identique à celle de la couverture de protection, lesdites bandes de grille (41) étant supportées par une pluralité de lignes de crête (21) additionnelles situées en parallèle et sur les lignes de crête (20) de la couverture de protection et ancrées à un support (32) additionnel situé à l'extrémité supérieure du piquet (30) à un troisième niveau (A3) supérieur au deuxième niveau (A2), et par une pluralité de lignes de vallée (11) additionnelles situées en parallèle et sur les lignes de vallée (10) de la couverture de protection.
